(19) **Europäisches Patentamt / European Patent Office / Office européen des brevets**

(11) **EP 3 016 394 A1**

(12) **EUROPEAN PATENT APPLICATION**

(43) Date of publication:
04.05.2016 Bulletin 2016/18

(51) Int Cl.:
*H04N 21/234* (2011.01)　　*H04N 21/2343* (2011.01)
*H04N 21/24* (2011.01)　　*H04N 21/414* (2011.01)
*H04N 21/61* (2011.01)　　*H04N 21/647* (2011.01)

(21) Application number: **14306735.3**

(22) Date of filing: **30.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventor: **Valentin, Stefan
70435 Stuttgart (DE)**

(74) Representative: **2SPL Patentanwälte PartG mbB
Postfach 15 17 23
80050 München (DE)**

Remarks:
Amended claims in accordance with Rule 137(2) EPC.

(54) **Apparatus, user equipment, adaptation server, method and computer program for determining information related to a presentation time of buffered media data**

(57)　An apparatus (10), a user equipment (400), an adaptation server (500), a method and a computer program for determining information related to a presentation time of buffered media data (50) at a media presentation device (100), the media data (50) being transmitted to the media presentation device (100) through a data channel (80). The apparatus (10) comprises an input (12) to obtain information related to a predicted future channel data capacity, an output (14) to provide the information related to the presentation time of the buffered media data (50), and a control module (16) to determine the information related to the presentation time based on the information related to the predicted future channel data capacity.

Fig. 1

**Description**

Technical Field

Embodiments relate to an apparatus, a user equipment, an adaptation server, a method and a computer program for determining information related to a presentation time of buffered media data at a media presentation device, more particularly but not exclusively, for determining the information related to the presentation time based on information related to a predicted future channel data capacity.

Background

This section introduces aspects that may be helpful in facilitating a better understanding of the invention(s). Accordingly, the statements of this section are to be read in this light and are not to be understood as admissions about what is in the prior art or what is not in the prior art.

One of the major applications in modern networks, such as the Internet, is the streaming of media data. Providing media data as a stream, as compared to a full download, has a number of advantages: The media data may be used shortly after the stream has started, without having to wait for a complete download, the stream may also be adapted over time, as some media may only be relevant for, e.g., a specific location, or some media may adapt to a lower or higher transmission capacity.

Nonetheless, media streaming may also impose a number of inherent problems: As the buffers for the media on the receiving side may be limited, or as providers of content and network may choose to limit the amount of data transferred in advance, clients using streaming media data may adopt schemes to avoid empty buffers, find a compromise between different inherent costs, and avoid stalling the service the streaming media data is used for.

Conventional mechanisms used for controlling the buffer state and requesting new data segments may thus be based on the state of the buffer, the data size of the data segments, and the channel capacity available for transmitting the data. Unfortunately, the channel capacity available for transmitting data may quickly vary in several orders of magnitude, from a few kilobits per second or less to hundreds of megabits per second. Furthermore, some service providers may provide their content in different quality levels, to account for different transmission capacity scenarios. Some providers of streaming video content have, for example, long provided different quality levels of their content, to match different transmission capacities and screen sizes.

Further information can be found in:

M. L. Puterman, "Markov Decision Processes: Discrete Stochastic Dynamic Programming," Wiley, 2005,

W. Law, "OTT and Scale: The Darkness and the Light", Over-the-top TV conference (OTTCon), 2013,

R.P. Pantos, W.M. May, "HTTP Live Streaming", Internet-Draft V13, April 16, 2014, Available at http://tools.ietf.org/html/draft-pantos-http-live-streaming-13,

ISO/IEC, "Information technology -- Dynamic adaptive streaming over HTTP (DASH) -- Part 1: Media presentation description and segment formats", International Standard DIS 23009-1.2, Nov. 2011,

J. Jiang, V. Sekar, and H. Zhang, Improving fairness, efficiency, and stability in HTTP-based adaptive video streaming with FESTIVE, In Proc. of the 8th Int. Conf. on Emerging Networking Experiments and Technologies, 2012,

G. Tian and Y. Liu. Towards agile and smooth video adaptation in dynamic HTTP streaming, In Proc. of the 8th Int. Conf. on Emerging Networking Experiments and Technologies, 2012,

H. Riiser, H. S. Bergsaker, P. Vigmostad, P. Halvorsen, and C. Griwodz, A comparison of quality scheduling in commercial adaptive HTTP streaming solutions on a 3G network, In Proc. Of the 4th Workshop on Mobile Video, 2012,

C. Muller, S. Lederer, and C. Timmerer, An evaluation of dynamic adaptive streaming over HTTP in vehicular environments, In Proc. of the 4th Workshop on Mobile Video, 2012, and Alcatel-Lucent, "Bell Labs and net mobile AG improve the quality of video streaming in vehicles on the move", Press release available at http://www.alcatel-lucent.com/press/2014/bell-labs-and-net-mobile-ag-improve-quality-video-streaming-vehicles-move, June 17, 2014, URL retrieved on Sep. 20, 2014

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a user equipment, an adaptation server, a method and a computer program for determining information related to a presentation time of buffered media data at a media presentation device. Providers and clients of streaming media data seek to avoid stalls of the buffered media data during presentations and to improve the fluency of media streaming by quality level selection. Operating at the application layer, conventionally, algorithms typically observe the end-to-end data rate during the media download. This quantity represents the rate at which the buffer is filled. If it falls below the rate required for the current streaming quality, the algorithm may decrease the quality level. If the end-to-end rate is observed to increase above the data rate required for a higher quality level, the algorithm may choose the according quality.

Embodiments provide an apparatus for determining information related to a presentation time of buffered media data at a media presentation device. The media data is transmitted to the media presentation device through a data channel. The apparatus comprises an input to obtain information related to a predicted future channel data capacity and an output to provide the information related to the presentation time of the buffered media data. The apparatus further comprises a control module to determine the information related to the presentation time based on the information related to the predicted future channel data capacity. Using a predicted future data capacity, as compared to a current data capacity, may allow an improved adaptation of presentation time of the buffered media data prior to transmission capacity degradations.

In various embodiments, the control module may be configured to determine information related to a first higher presentation time if the information related to the predicted future channel data capacity indicates a first lower future channel data capacity. The control module may further determine information related to a second lower presentation time if the information related to the predicted future channel data capacity indicates a second higher future channel data capacity. By attempting to adapt the presentation time, the control module may avoid stalls at unfavorable channel data capacities, and it may improve the selection of media at favorable channel data capacities.

In some embodiments, the information related to the presentation time may correspond to information related to a selected quality level of a service providing the buffered media data. The control module may, in embodiments, be configured to determine information related to a first lower selected quality level if the information related to the predicted future channel data capacity indicates a first lower future channel data capacity. It may further be configured to determine information related to a second higher selected service level if the information related to the predicted future channel data capacity indicates a second higher future channel data capacity. By attempting to adapt the selected service quality level, the control module may avoid or reduce stalls at unfavorable channel data capacities, and it may improve the quality of the media at favorable channel data capacities.

In embodiments, the buffered media data may comprise one or more media segments. A lower selected quality level may correspond to media segments comprising a lower amount of data than media segments corresponding to a higher selected quality level. By selecting the appropriate quality level, the data size of the media segments may be adjusted to the capacity of the data channel, which may both avoid or reduce stalls and provide a better adaptation of a quality of the media data.

In various embodiments, the data channel may correspond to a wireless transmission channel, of which a current capacity at the media presentation device may fluctuate.

In some embodiments, the input may also be configured to receive information related to a buffer status indicator of a buffer for the buffered media data. The control module may, in some embodiments, be configured to determine the information related to the presentation time also based on the information related to the buffer status indicator. Using this information, the control module may choose to adapt the information related to a presentation time if there is a specific buffer state, e.g. if the buffer is empty, at some particular intermediate state, or if the buffer is full.

In various embodiments, the control module may be configured to determine information related to a first higher presentation time corresponding to a first higher amount of stored media data in the buffer if the information related to the predicted future channel data capacity indicates a first lower future channel data capacity. The control module may further be configured to determine information related to a second lower presentation time corresponding to a second lower amount of stored media data in the buffer if the information related to the predicted future channel data capacity indicates a second higher future channel data capacity. The control module may so be able to choose to increase the data in the buffer if a lower future data capacity is expected, to avoid or reduce stalling.

In some embodiments, the buffered media data may comprise one or more media segments. The control module may, in some embodiments, be configured to affect the amount of buffered media data in the buffer in terms of a higher number of media segments in the buffer. The control module may further be configured to store media segments comprising a lower amount of data if a buffer filling state is below a threshold. It may further be configured to store media segments comprising a higher amount of data if a buffer filling state is above a threshold. The control module may so be able choose to adapt the information related to the presentation time of the buffered media data if there is a specific buffer state, e.g. if the buffer is empty, at some particular intermediate state, or the buffer is full.

In embodiments, the control module may be configured to determine the information related to the presentation time based on an iterative algorithm running in an adaptation cycle. The iterative algorithm may be based on a utility function depending at least on a state of a buffer for the buffered media data. The state of the buffer may correspond to one of a buffer underflow state, an intermediate filling state, or a full buffer state. By using an iterative algorithm running in an adaptation cycle, the algorithm may be able to continuously adapt the information related to the presentation time.

In some embodiments, the apparatus may further be configured to obtain information related to a predicted future channel data capacity at a media presentation device in a first radio system. The apparatus may further comprise at least one receiver module to receive radio signals of the first radio system and radio signals of a second radio system, wherein an effect of radio channel shadowing may be higher on the radio signals of the second radio system than on the radio signals of the first radio system. The control module may further be configured to determine a current channel state for the second radio system. It may further be configured to provide first information related to a better predicted future channel data capacity for the first radio system if the information related to the current channel state of the radio signals of the second radio system indicates a better current channel state of the second radio system, and to provide second information related to a worse predicted future channel data capacity for the first radio system if the information related to the current channel state of the radio signals of the second radio system indicates a worse current channel state of the second radio system. The information related to a current channel state of the second radio system might so be used to predict a future channel capacity for the first radio system, and thus, it might be used to determine the information related to the presentation time.

Embodiments also provide a user equipment comprising the apparatus described above, wherein the data channel corresponds to a wireless transmission channel, and where the apparatus may be used to determine the information related to the presentation time. The apparatus might thus be used to decrease the number of stalls of media data streamed to the user equipment.

Embodiments also provide an adaptation server for a network comprising one or more clients requesting one or more media services, wherein the adaptation server comprises the apparatus described above. The adaptation server may be able to adapt the presentation time such that a better overall quality across one or more clients might be achieved.

In some embodiments also comprising the adaptation server, the control module may be configured to determine the information related to the presentation time of the buffered media data for the one or more media services based on information related to the predicted future channel data capacity and/or information related to a buffer status indicator of the one or more clients. The adaptation server, having data about a predicted channel state of the one or more clients and information related to the buffer status indicator of the one or more clients, may be able to adapt the presentation time such that a better overall quality across one or more clients might be achieved.

Embodiments further provide a method for determining information related to a presentation time of buffered media data at a media presentation device. The media data is transmitted to the media presentation device through a data channel. The method comprises obtaining information related to a predicted future channel data capacity and providing information related to the presentation time of the buffered media data. The method further comprises determining the information related to the presentation time based on information related to the predicted future channel data capacity.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus for determining information related to a presentation time of buffered media data at a media presentation device;

Fig. 2 illustrates a block diagram of a system using HAS streaming adaptation;

Fig. 3 illustrates a block diagram of buffered media data comprising media segments of variable size in an embodiment;

Fig. 4 shows a decision analysis of an embodiment based on buffer state and channel state;

Fig. 5 illustrates a block diagram of an embodiment using the state of a second radio system as a prediction of the future channel data capacity;

Fig. 6 illustrates a transition diagram of a finite state machine of an embodiment;

Fig. 7 shows a bar diagram of measurements taken of the number of stalls for conventional systems and the number of stalls of embodiments;

Fig. 8 shows an Empirical Cumulative Distribution Function (ECDF) of the video bitrate of measurements taken of a conventional system and of embodiments;

Fig. 9 shows a bar diagram of the video bitrate of measurements taken of a conventional system and of embodiments;

Fig. 10 illustrates a block diagram of an embodiment of a user equipment comprising an embodiments of the apparatus;

Fig. 11 illustrates a block diagram of an embodiment of an adaptation server comprising an embodiments of the apparatus;

Fig. 12 illustrates a flow chart of an embodiment of a method for determining information related to a presentation time of buffered media data at a media presentation device; and

Fig. 13 illustrates a block diagram of an embodiment of a number of network components potentially comprising the apparatus 10.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Stalls may be considered a major problem of HTTP-based media streaming in mobile and other networks. Due to the time-variant nature of the wireless channel, the offered data rate may quickly fall below the rate required for streaming. In this case, the playout buffer at the mobile device may be consumed and, eventually, an empty playout buffer leads to a stalling video or audio stream.

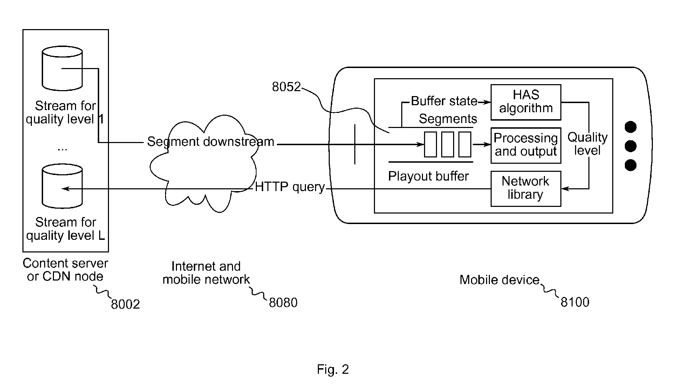

To avoid such stalls, while preserving high average quality levels, HTTP Adaptive Streaming (HAS) systems may be used as illustrated in Fig. 2. Fig. 2 shows a block diagram of a conventional system using HAS, which may include a content server 8002, a data connection 8080, and a mobile device 8100, comprising a buffer 8052. These adaptation algorithms may be typically implemented in the player application at the mobile device and may make use of the fact that content servers may typically offer a media stream at multiple quality levels. Once the quality level is defined, the player application downloads the according sub-stream. Each of these sub-streams may be fragmented in so-called chunks or segments, which might usually contain multiple seconds of audio and/or video material. By switching between these sub-streams a HAS algorithm might adapt the streaming quality segment-by-segment and, thus, may vary the data rate required for streaming. This may enable HAS to adapt the required data rate to the data rate offered by the channel. The requested or required data rate in bits/s denotes the data rate needed to download a media segment at a given quality level. This rate may be a function of the content's source encoding rate plus certain overhead for communication and storage. Although with the common variable bitrate encoding this rate may vary from segment to segment, typically a single value may be given per sub-stream. This value, sometimes called bandwidth, may represent the maximum required data rate in bit/s taken over all media segments of the stream or sub-stream.

However, this adaptation is a complex problem since the channel state, and therefore its data rate, may change quickly and drastically due to multi-path propagation of the radio signal and user mobility.

There are algorithms to improve the fluency of HTTP-based video streaming by quality level selection. Operating at the application layer, these algorithms may typically observe the end-to-end data rate during the media download. This represents the rate at which the buffer is filled. If it falls below the rate required for the current streaming quality, the algorithm may decrease the quality level. If the end-to-end rate is observed to increase above the data rate required for a higher quality level, the algorithm may choose the according quality.

Three fundamental problems make it difficult to apply this approach to mobile media streaming.

First, end-to-end data rate as observed at the application layer may provide an outdated observation of the wireless channel state. Due to various buffers and control loops at the TCP, IP and Link layer, it may take hundreds of milliseconds or even seconds if a drastic reduction of the wireless channel state is observed from the end-to-end data rate. At this time, the algorithm may have lost valuable time to fill the playout buffer with a longer playout time. In some embodiments, the wireless channel state is observed directly, e.g., in terms of the Received Signal Strength Indication (RSSI) that is available at the application layer of mobile devices. This may allow a fast adaptation as soon as the channel state changes.

Second, end-to-end data rate is a complex metric that may depend on various dynamic processes in the network such as load, wireless resource allocation, wireless interference, and wireless channel state. It is very difficult to model and to analyze the causality behind its variation and, thus, hard to build robust adaptation algorithms based on this metric. By using the channel state, some embodiments may not only allow faster adaptation but also may provide a more direct observation. Compared to the end-to-end data rate, the wireless channel state is a well-understood process, which makes the design of an adaptation algorithm substantially simpler and more robust.

Third, conventional algorithms for HAS are non-anticipative. That means that their quality level selection may only be based on current and historic observations. This may lead to adaptation decisions that may be too late to cause a positive effect. For instance, a typical HAS scheme might only detect seconds after the user went to a tunnel that mobile signal coverage is lost. Without coverage, its quality reduction may have no effect and the media stream stalls.

There may be a desire to provide a fundamentally new HAS technique that adapts streaming quality such that the requested data rate may be less or equal to the data rate offered by the wireless channel, by adapting to a prediction of the channel data capacity. This may allow to prepare the buffer for a temporary reduction of wireless data rate (e.g., due to a coverage loss or an overloaded cell). Once such reduction is predicted, in some embodiments, the video quality may be decreased to fill the buffer with more streaming time. Since now a longer time may be played back while the wireless data rate is low, a disruption of the media stream may become less likely and the duration of such disruption is reduced. After the wireless channel state has improved and no upcoming reduction is predicted, in some embodiments the video quality may be increased to assure a high average service quality.

This approach can be illustrated by a simple example. It is assumed that a vehicular user (e.g., in a car or train) is streaming video and will traverse a tunnel in the next seconds. Although the wireless data rate is high on the average, it is predicted that received signal strength in this tunnel is too low to support any video playback. Before the user reaches the tunnel, in embodiments, the video quality may be decreased. Since the wireless data rate may not have decreased yet, the user's player might now download more seconds of the video per channel use than before. Once the user enters the tunnel, a high number of video seconds may be stored in the buffer. This may allow smooth playback while the tunnel is traversed. If the user has left the tunnel and no upcoming coverage loss is predicted, in some embodiments, the video quality may be increased again. This method may allow a better video fluency by only occasionally decreasing the video's resolution.

Embodiments may be applicable to arbitrary sizes of the playout buffer, yet the maximum buffer size may be an important operational parameter. In embodiments the buffer or playout buffer may correspond to any data buffer, e.g. a memory for at least temporarily storing data, such as, for example, Random Access Memory (RAM), non-volatile storage, and flash memory. Live streaming (e.g., mobile TV services) may require a small buffer, which may only allow compensating for a short outage of the wireless link. Longer buffers (e.g., for stored content) may allow some embodiments to compensate for long-term outages. Here, the performance, in some embodiments, may be limited by the time for which the channel state or data capacity can be accurately predicted in advance.

The term outage denotes the event that the channel data capacity falls below the data capacity required to download a media segment. A media segment may correspond to a data packet or a block of data, e.g. digital or binary data, which may comply with a protocol, e.g. a streaming or media service protocol. Note that this event may depend on the quality level of the segment. That is, the same channel data capacity may lead to an outage at a high quality level but not if a low quality level is chosen.

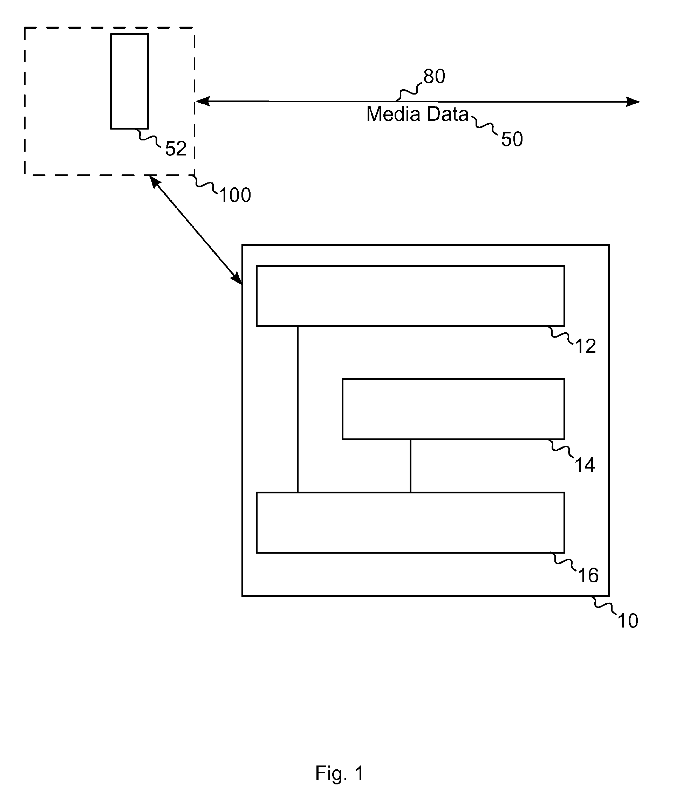

In the following, some embodiments for an apparatus, a user equipment, an adaptation server, a method and a computer program for determining information related to a presentation time of buffered media data at a media presentation device will be described. Fig. 1 illustrates a block diagram of an apparatus 10, comprising an input 12, an output 14 and a control module 16. Fig. 1 further illustrates a media presentation device 100, comprising a buffer 52. The media presentation device 100 is coupled to the apparatus 10, and the input 12 and the output 14 are coupled to the control module 16. Fig. 1 further illustrates a data channel 80, which is coupled to the media presentation device 100, and through which buffered media data 50 is transported.

The apparatus 10 is configured to determine information related to a presentation time of buffered media data 50 at a media presentation device 100. A presentation time of buffered media data may correspond, in some embodiments, to information related a playout time in a playout buffer of a media streaming device, or information related to a buffered radius for a mapping or navigation service. The media presentation device might correspond to, in embodiments, user equipment, a mobile device, a smartphone, a tablet computer, a personal digital assistant, a personal computer, a laptop computer, a navigation device, a television, a mobile television, a media streaming device, an internet radio receiver, an audio receiver, or a video receiver.

The media data 50 is transmitted to the media presentation device 100 through a data channel 80. The media data may correspond, in some embodiments, to video data, audio data, multimedia data, mapping data, navigation data, composite multi-media data, or visual data. The data channel may correspond to a wired or wireless data channels suitable for the transmission of data.

In some embodiments, the data channel 80 may correspond to a wireless transmission channel. Wireless transmission channels may include transmission channels provided by, in embodiments, a mobile communication system.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

The apparatus 10 comprises an input 12 to obtain information related to a predicted future channel data capacity and an output 14 to provide the information related to the presentation time of the buffered media data 50.

An input may correspond to an interface for receiving information, which may be represented by digital (bit) values according to a specified code or protocol, within a module, between modules or between modules of different entities. An output may correspond to an interface for transmitting information, which may be represented by digital (bit) values according to a specified code or protocol, within a module, between modules, or between modules of different entities.

The apparatus 10 further comprises a control module 16 to determine the information related to the presentation time based on the information related to the predicted future channel data capacity. In embodiments the control module 16 may be implemented using one or more processing units, one or more processing devices, any means for processing, such as a processor, a computer or a programmable hardware component being operable or configured with accordingly adapted software. In other words, the described functions of the control module 16 may as well be implemented in software, which is then executed on one or more programmable hardware components. Such hardware components may comprise a general purpose processor, a Digital Signal Processor (DSP), a micro-controller, etc.

In some embodiments, the control module 16 may be configured to determine information related to a first higher presentation time if the information related to the predicted future channel data capacity indicates a first lower future channel data capacity, and to determine information related to a second lower presentation time if the information related to the predicted future channel data capacity indicates a second higher future channel data capacity. In various embodiments, the information related to the presentation time may correspond to information related to a selected quality level of a service providing the buffered media data 50. The control module 16 may further be configured to determine information related to a first lower selected quality level if the information related to the predicted future channel data capacity indicates a first lower future channel data capacity, and to determine information related to a second higher selected service level if the information related to the predicted future channel data capacity indicates a second higher future channel data capacity.

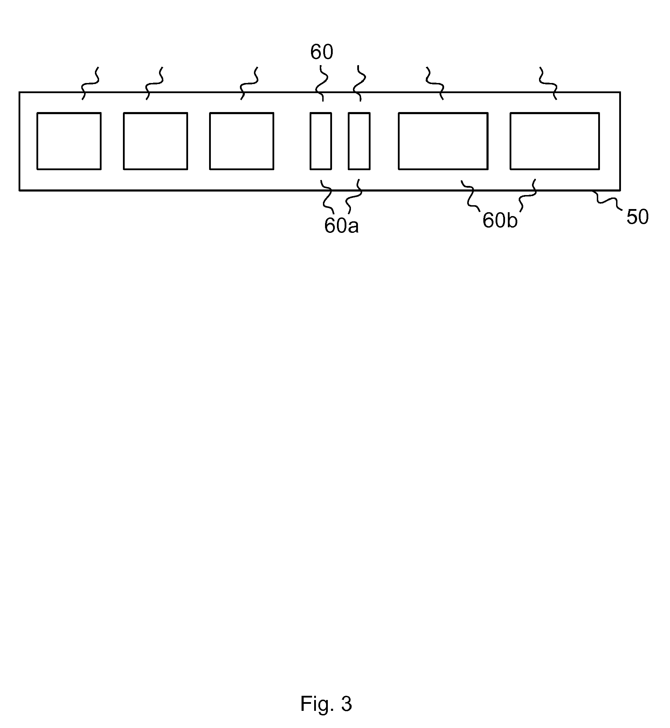

As illustrated in Fig. 3, in some embodiments, the buffered media data 50 may comprise one or more media segments 60. A lower selected quality level may correspond to media segments 60a comprising a lower amount of data than media segments 60b corresponding to a higher selected quality level.

In embodiments, the control module 16 may request media segments of a lower quality, with a corresponding smaller data size, if the future channel capacity is predicted to be lower, to increase the presentation time per amount of data transmitted. The control module 16 may further request media segments of a higher quality, with a corresponding larger data size, if the future channel capacity is predicted to be higher, to increase the quality of the media data. A segment time denotes the duration of each media segment. HTTP-based media streaming techniques may keep this time constant, while the size of the media segment in bits changes. In some embodiments, the maximum buffer size may affect the operation of the adaptation procedure. As long as a small buffer is not completely filled, its filling state may be irrelevant for the adaptation decision. Once an outage is predicted, in embodiments, the streaming quality may be decreased to download as many seconds of content as possible.

With large or even unlimited buffer size, embodiments may operate differently. If a large buffer is sufficiently filled, there might be no need to decrease the streaming quality in case of a short predicted outage. On the other hand, longer outages or insufficiently filled buffers may require a reduction of streaming quality.

In various embodiments, the input 12 may also be configured to receive information related to a buffer status indicator of a buffer 52 for the buffered media data 50. The control module 16 may, in embodiments, be configured to determine the information related to the presentation time also based on the information related to the buffer status indicator.

In some embodiments, the control module 16 may configured to determine information related to a first higher presentation time corresponding to a first higher amount of stored media data 50 in the buffer 52 if the information related to the predicted future channel data capacity indicates a first lower future channel data capacity. It may further be configured to determine information related to a second lower presentation time corresponding to a second lower amount of stored media data 50 in the buffer 52 if the information related to the predicted future channel data capacity indicates a second higher future channel data capacity.

In various embodiments, the buffered media data 50 may comprise one or more media segments 60. The control module 16 may be configured to affect the amount of buffered media data 50 in the buffer 52 in terms of a higher number of media segments 60 in the buffer 52. The control module 16 may further be configured to store media segments 60 comprising a lower amount of data if a buffer filling state is below a threshold, and to store media segments 60 comprising a higher amount of data if a buffer filling state is above a threshold.

In embodiments, the control module 16 may be configured to determine the information related to the presentation time based on an iterative algorithm running in an adaptation cycle, the iterative algorithm being based on a utility function depending at least on a state of a buffer 52 for the buffered media data 50, the state of the buffer 52 corresponding to one of a buffer underflow state, an intermediate filling state, or a full buffer state. A buffer underflow state may correspond to a state, at which the buffer 52 is fed with media segments 60 at a lower speed than the media segments 60 are being read from it, resulting in an empty buffer, an intermediate filling state may correspond to a state, at which a buffer is neither empty nor full, and a full buffer state may correspond to a state, at which the buffer is completely filled with media segments 60.

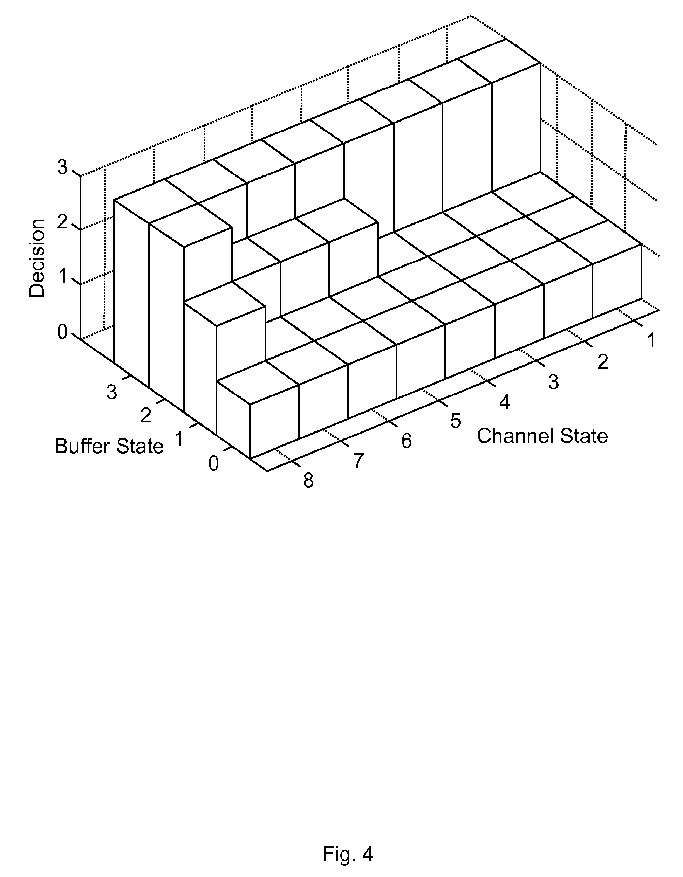

In some embodiments, the current filling state of the buffer 52, further also denoted playout buffer 52, may be considered, and, thus, the buffering history for quality adaptation. It follows the intuition that, even if an outage is predicted, the quality of the buffered media data 50 may not necessarily need to be reduced if a larger number of media segments is still available in the buffer, as illustrated in Fig. 4. In Fig. 4, the vertical axis refers to the quality level, embodiments may choose out of three available streaming qualities for the buffered media data 50 corresponding to V={1.48, 3.1, 3.7} Mbit/s. The first horizontal axis represents the buffer filling state in segments, with a maximum buffer size of three. The second horizontal axis represents the predicted channel state, quantized to eight possible values, where eight represents the highest available bitrate. In this simulation, the channel state is based on a trace file obtained from a drive test.

The playout buffer 52, may be a buffer in a media-presenting application (or its underlying software framework) at the media presentation device 100. This buffer stores the incoming segments before they are processed and played back.

The playout time is the time of the content stored in the playout buffer 52. A playout time of $N$ seconds means that $N$ seconds of content can be played back without filling the buffer.

As shown in embodiments, the quality of media segments might not be decreased at a high buffer filling state even if a low channel state is predicted. If the buffer is empty, however, even a high channel state may lead to a low selected quality level. This operation may provide a tradeoff between stalls and bitrate of the media stream. A quality level is an index that points to a certain sub-stream of the same content, encoded at a different bit rate, resulting in a different size for the segment. In some embodiments, the quality level is assumed to be a positive integer referring to the sub-streams quality in ascending order. For instance, a quality level 1=1 refers to the lowest available quality, while 1=2 refers to the next higher available quality. Once the quality level is defined, the according sub-stream may be used.

Fig. 4 might also be expressed as a lookup table and, thus, directly used for online adaptation either at the mobile device or at a centralized adaptation server. However, to compute this

table, an offline algorithm might be used that may be formalized as follows. Each downloaded media segment 60 with a quality level 1 may bring a given reward of $R(l)$. On the other hand, a stall (i.e., underflow of the playout buffer) may lead to a given penalty $W_U$. While the revenue would be typically chosen to be the maximum streaming bitrate at quality level 1, penalty $W_u$ is a free parameter that might be used to trade off fluency vs. streaming bitrate.

For an arbitrary adaptation cycle the utility for the segment downloaded in the next time slot

t + 1 may now be defined as

$$
u_{t+1} = \begin{cases} d_{t+1}R(a_{t+1}) - W_u(p - b_t - d_{t+1}) & \text{if } b_t - p + d_{t+1} < 0, \text{buffer UF} \\ d_{t+1}R(a_{t+1}) & \text{if } 0 \le b_t - p + d(s_{t+1}, a_{t+1}) \le B, \\ (B - b_t + p)R(a_{t+1}) & \text{if } b_t - p + d_{t+1} > B, \text{buffer full} \end{cases}
$$

which may account for the three cases buffer underflow (UF), intermediate filling state of the buffer, and full buffer. In this definition,

- $d$ accounts for the number of segments the user is predicted to be able to download in the next slots,
- $p$ for the number of segments that are played back,
- $B$ for the maximum size of the buffer in segment,
- $a$ to the action, i.e., state of the algorithm.

The buffer state in the next time slot may be defined as

$$
b_{t+1} = \begin{cases} 0 & \text{if } b_t - p + d_{t+1} < 0, \text{buffer empty} \\ b_t - p + d_{t+1} & \text{if } 0 \le b_t - p + d_{t+1} \le B \\ B & \text{if } b_t - p + d_{t+1} > B, \text{buffer full} \end{cases}
$$

and the average utility U as a time average of u over all preceding time slots of a session.

In embodiments, the aim is to choose the quality level $l_{t+1}$ from the set of all available qualities {1,2, ..., $L$} such that a better value for $U$ may be obtained. Embodiments might be implemented as a search over all possible states of channel and of the buffer in the upcoming time slot. Not all channel data capacities and buffer states may be possible, the buffer may only decrease by $p$ segments, only increase by $d$ segments and the predictor might limit the number of possible channel states. Consequently, the search space may be limited and, in embodiments, be feasible for offline computation.

A standard method to implement this type of search might be the Value Iteration Method to solve a Markov Decision Process (MDP). Such implementation has complexity $O[|A|(|S||B|)^2]$ where the size of the channel state space $|S|$, the size of the buffer state space $|B|$ and the number of available video qualities $|A|$ may typically be small. A more efficient implementation might be provided by performing a truncated search, based on the insight from Fig. 4. The selected quality level might likely be higher under better channel data capacities or higher buffer states, where the risk of buffer underflow may become smaller. Consequently, implementation complexity might be reduced by ignoring quality decreases when the buffer state is high and by ignoring quality increases when the buffer state is low.

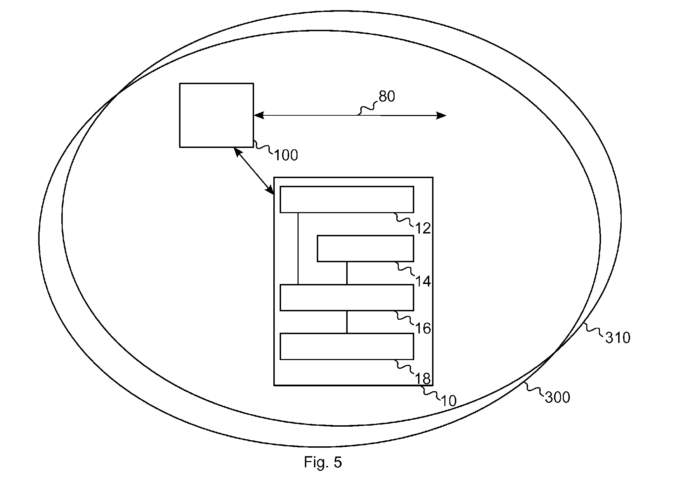

As shown in Fig. 5, in some embodiments, the apparatus 10 may be further configured to obtain information related to a predicted future channel data capacity at a media presentation device 100 in a first radio system 300. The apparatus 10 may further comprise at least one receiver module 18 to receive radio signals of the first radio system 300 and radio signals of a second radio system 310, wherein an effect of radio channel shadowing is higher on the radio signals of the second radio system 310 than on the radio signals of the first radio system 300.

The receiver module 18, may be implemented as any means for receiving or transceiving, i.e. receiving and/or transmitting etc., one or more receiver or transceiver units, one or more receiver or transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The control module 16 may be further configured to determine a current channel state for the second radio system 310. The control module 16 may be further configured to provide first information related to a better predicted future channel data capacity for the first radio system 300 if the information related to the current channel state of the radio signals of the second radio system 310 indicates a better current channel state of the second radio system 310, and to provide information related to a worse predicted future channel data capacity for the first radio system 300 if the information related to the current channel state of the radio signals of the second radio system 310 indicates a worse current channel state of the second radio system 310.

In embodiments, the first radio system 300 may correspond to a terrestrial radio system and the second radio system 310 may correspond to a satellite radio system. A terrestrial radio system may, in some embodiments, correspond to, for example, a Long Term Evolution (LTE), Universal Mobile Telecommunication System (UMTS) or Global System for Mobile communication (GSM) radio system, while a satellite radio system may correspond to a GPS radio system, or a Satellite Digital Audio Radio Service (SDARS).

In further embodiments, the first 300 and second 310 radio systems may correspond to terrestrial radio systems, wherein the first radio system 300 operates in a lower frequency range than the second radio system 310. The first 300 and second 310 radio systems may, in embodiments, correspond to LTE radio systems operating in the 800 and 2500 MHz frequency range, or to other radio systems operating in different frequency ranges. Further examples of terrestrial radio systems, such as used in mobile communication systems, have been listed in more detail above.

In some embodiments, the better predicted future channel data capacity may correspond to a channel state supporting data transmission at a higher rate than in a channel state corresponding to the worse predicted future channel data capacity state. This may be due to physical properties of a channel, such as, for example, signal receiver power or signal-to-noise ratio, or due to the availability of different modulations, protocols or technologies, such as LTE or UMTS.

In embodiments, an anticipatory adaptation of the streaming quality may be performed, which may be based on the predicted channel state, and which may ignore the history of the playout buffer. As long as there is sufficient space in the buffer to store at least one segment of the smallest available media quality, some embodiments may applied.

Embodiments may use that an increase in localization error indicates an upcoming reduction of predicted future channel data capacity. In Embodiments, the wireless channel may correspond to the first radio system 300, and the localization system(s) used to determine the localization error may correspond to the second radio system 310. For each adaptation cycle t, the current values and the history of the localization error $e(t - T_2, ..., t)$ and of the channel state $\gamma(t - T_1, ... , t)$ may be used to choose if to increase or to decrease the quality of the next media segment. Here, $T_1$ and $T_2$ may express the number of time slots the algorithm looks back to consider channel state and localization history, respectively.

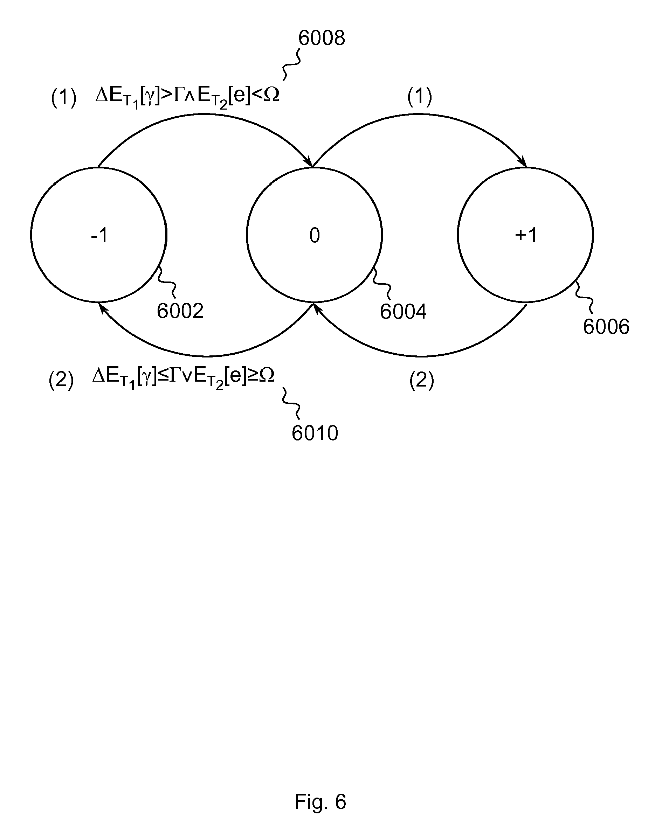

Fig. 6 formalizes this main idea as a Finite-State Machine (FSM), consisting of three states "-1" 6002, "0" 6004 and "1" 6006, which are coupled by transition arrows between "-1" and "0" and "0" and "1". State transitions may be performed according to state-increasing (1) 6008 and state-decreasing (2) 6010 rules detailed below. The state "-1" may be seen as a reduction of streaming quality to the next lower quality level, if available. State "0" may represent no action, while state "+1" may represent an increase of video quality to the next higher level, if available. If no media stream at a higher quality level is available at state "+1", state machine may return to state "0". Equivalently, the algorithm may return to state "0", if no stream for a lower quality level if available at state "-1".

Depending on the state *a,* the quality level *l* for the next downloaded segment may, in embodiments, be given by $l(t + 1) := l(t) + a(t)$. Initially an arbitrary quality level might be selected. However, it might be reasonable to select either a medium quality level or choose the quality level with respect to the average channel state or data rate.

The transition rules for increasing the states may be symmetric. Thus, the rule (1) may equally apply to the transitions "-1"→"0" and to "0→+1". Likewise, the transition rules for decreasing the states may be symmetric and noted by (2).

The state-increasing rule (1) may be expressed as

$$\Delta E_{T_1}[\gamma] > \Gamma \wedge \mathrm{E}_{T_2}[e] < \Omega$$

where $\Delta$ is used to express a numerical gradient operation of the channel state vector y(t-T1,...,t), $E_T$ to express a moving average or similar operation (e.g., a low pass filter) over time window of size T, and $\wedge$ to express a logical AND operation. The values r and $\Omega$ represent thresholds that are constant for the time of at least one adaptation cycle. Rule (1) might be, thus, interpreted as "increase the quality of the next downloaded media segment" if the gradient, computed over a moving average of the channel state is above threshold $\Gamma$ AND the moving average of the localization error is below threshold $\Omega$.

In simple terms, video quality may be increased if the channel state significantly increases (i.e., positive gradient of significant value) AND if localization is sufficiently accurate.

The state-decreasing rule (2) may be defined as

$$\Delta E_{T_1}[\gamma] \leq \Gamma \vee E_{T_2[e]} \geq \Omega$$

using the same notation as above and V to express a logical OR operation. This rule might be, thus, interpreted as "decrease the quality of the next downloaded media segment" if the gradient, computed over a moving average of the channel state is lower or equal to threshold $\Gamma$ OR the moving average of the localization error is above or equal to threshold $\Omega$.

In simple terms, video quality may be decreased if the channel state significantly decreases (i.e., negative gradient of significant value) OR if the localization error is significantly high.

Due to different logical operations, (1) and (2) may not be symmetric to each other. The OR operation in rule (2) may require only one of the two metrics to fulfill its condition, while due to the AND in (1) both conditions may have to be true to increase media quality. Thus, the algorithm may tend to decrease the quality level with a higher probability than increasing it. This "conservative bias" may predetermine, in embodiments, the avoidance of video stalls at the cost of a decreased quality level.

However, field test results show that the average media quality is not decreased. A 52km drive test in a German city was conducted, covering a diverse track of smaller and larger roads, suburban and city areas and 4 tunnels. Driving time was at least 30 min, depending on the road traffic. Overall, the drive test was repeated 6 times under different weather and road traffic conditions.

During the test drive, Vodafone's conventional 2G and 3G network was used and a live video was streamed for 30 min by two Samsung Galaxy S2 smartphones running Android 4.1. Both phones were mounted under the windshield of a car 10cm apart from each other. One smartphone used a video player with a conventional HAS scheme to provide the baseline. The second smartphone used a video player operating as described above. The video stream was available in 4 quality levels, representing the maximum bitrates V = {364, 664, 996, 1396} kbit/s. To account for live streaming, the segment time was with $Ts$ = 4 s relatively short with a maximum buffer size of only 3 segments. The adaptation cycle time was $T_a = T_s/2$.

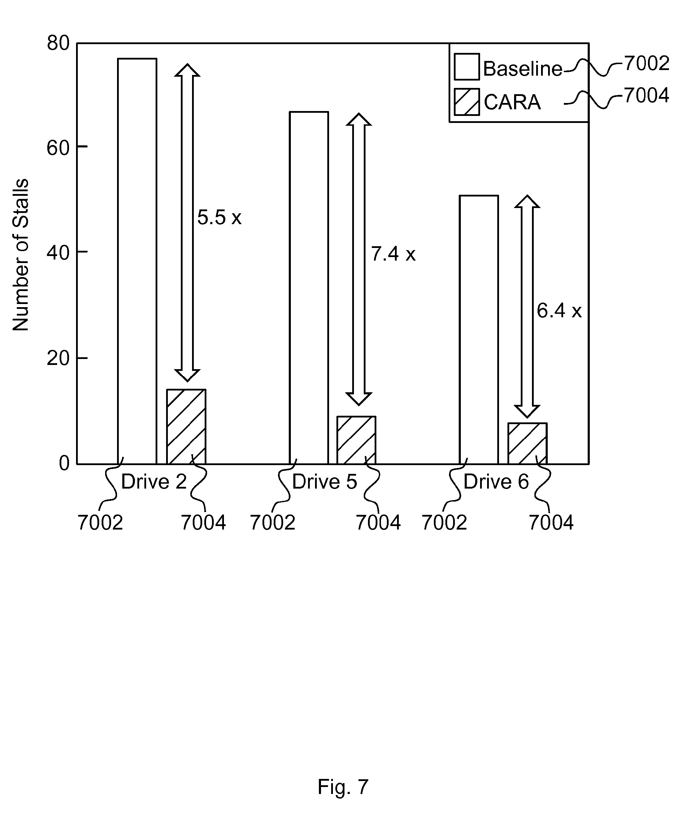

The number of video stalls for 3 test drives is shown in Fig. 7, where the above embodiment is denoted as Context Aware Resource Allocation (CARA). In embodiments, localization error e was obtained from the confidence radius as provided by the Global Position System (GPS) and channel state $\gamma$ was equivalent to the RSSI in dBm. Both metrics may be available at the application layer of the mobile device using standard functions of the Android operation system.

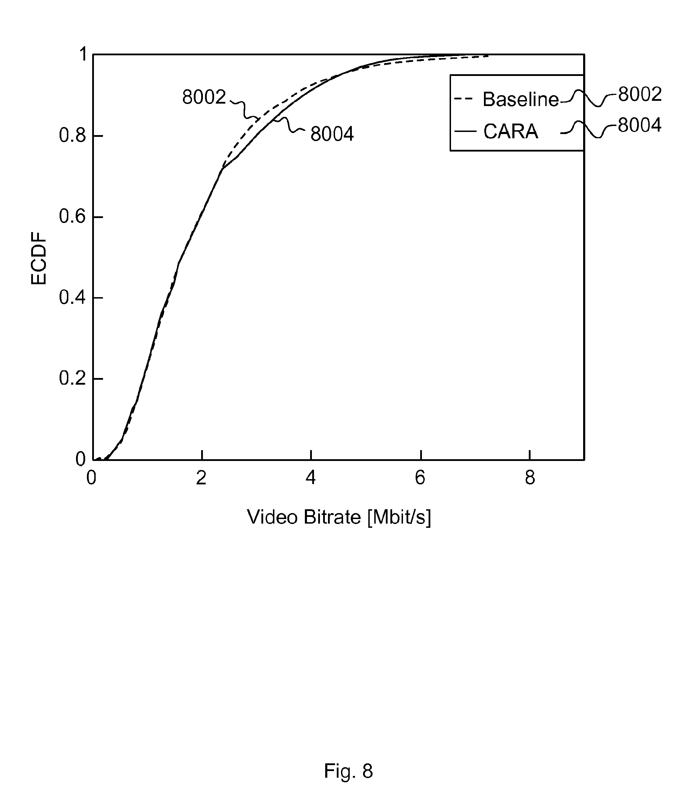

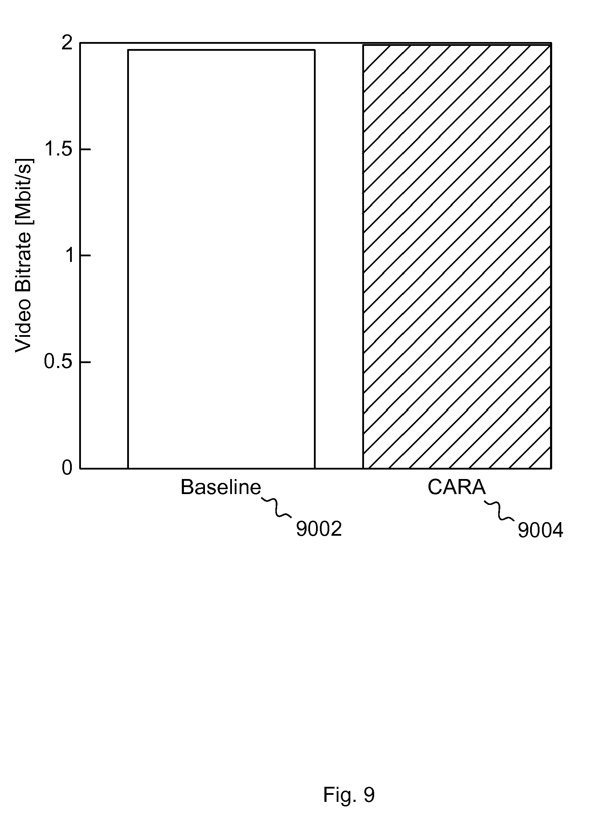

Fig. 7 shows a bar graph comparing the number of stalls for a conventional HAS scheme (baseline) 7002 and embodiments (CARA) 7004. The graph shows a reduction of video stalls, compared to the baseline. Fig. 8 shows an Empirical Cumulative Distribution Function (ECDF) of a drive test using a conventional (baseline) 8002 solution and using an embodiment (CARA) 8004. Fig. 9 shows a bar diagram comparing the average streaming bitrate of a conventional (baseline) 9002 solution and an embodiment (CARA) 9004 in a drive test. Fig. 8 and 9 show that, on the average, this high gain in video fluency may not come at the cost of lower streaming quality. Neither the ECDF nor the average of the video streaming bitrate show a statistical significant difference between the baseline and the studied embodiment.

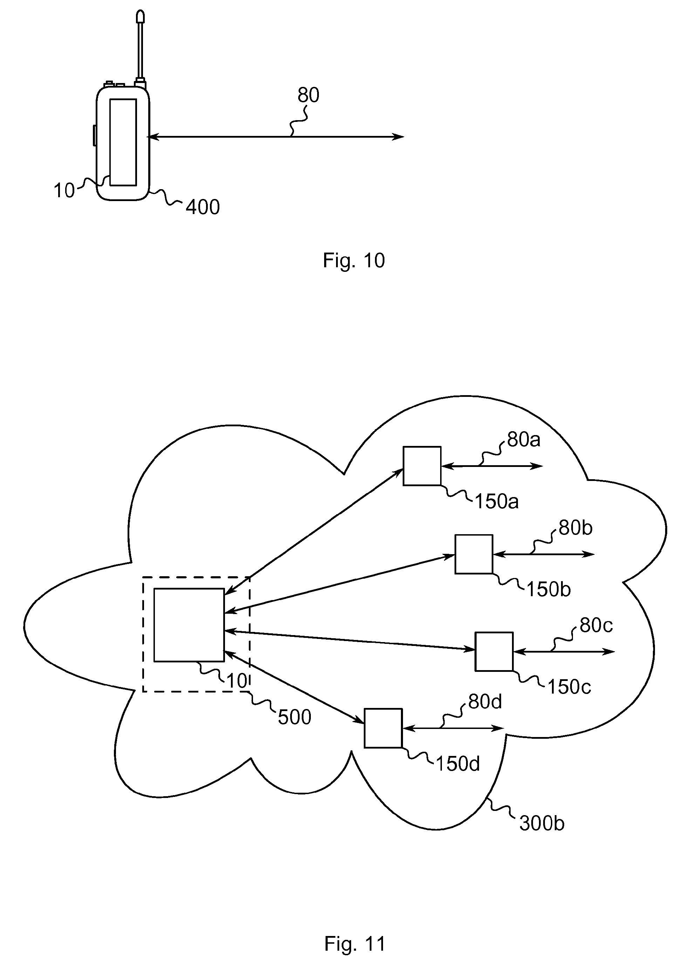

Fig. 10 shows a block diagram of an embodiment of a user equipment 400 comprising the apparatus 10, wherein the data channel 80, which is coupled to the user equipment 400, corresponds to a wireless transmission channel. A user equipment may correspond to a presentation device, a smartphone, a cell phone, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc.

Fig. 11 shows a block diagram of an embodiment of an adaptation server 500 for a network 300b comprising one or more clients 150 requesting one or more media services. The adaptation server 500 further comprises the apparatus 10 of claim 1. Fig. 10 further illustrates the data channels 80 being coupled to the one or more clients 150, which are further coupled to the adaptation server 500.

In some embodiments, the control module 16 may be configured to determine the information related to the presentation time of the buffered media data 50 for the one or more media services based on information related to the predicted future channel data capacity and/or information related to a buffer status indicator of the one or more clients 150. By using the information related to the predicted future channel data capacity and/or information related to a buffer status indicator of the one or more clients 150, the adaptation server 500 may be able to provide a better average adaptation for a number of clients, by, for example, providing load balancing or prioritizing of media presentation devices with a predicted worse channel state.

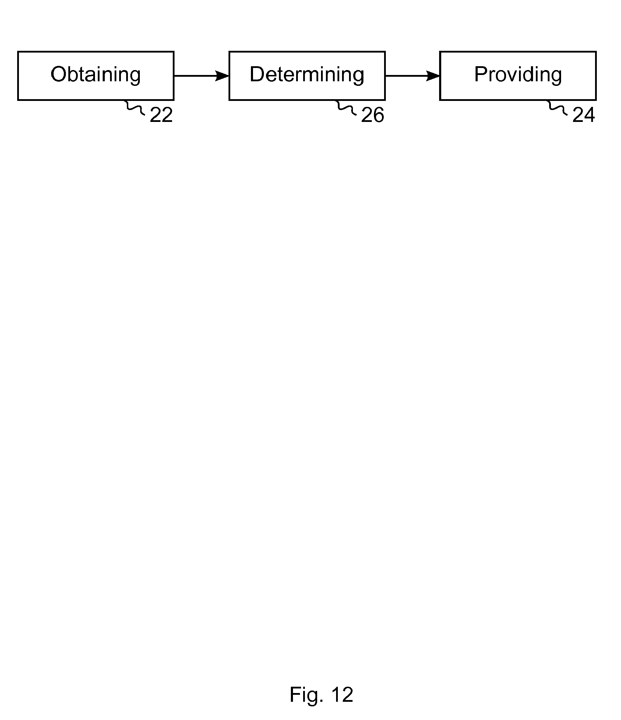

Fig. 12 shows a block diagram of a flow chart of an embodiment of a method for determining information related to a presentation time of buffered media data 50 at a media presentation device 100. The media data is transmitted to the media presentation device through a data channel 80. The method comprises obtaining 22 information related to a predicted future channel data capacity and providing 24 information related to the presentation time of the buffered media data 50. The method further comprises determining 26 the information related to the presentation time based on information related to the predicted future channel data capacity.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

Compared to state-of-the-art HAS algorithms, embodiments may decrease the number of video stalls by a factor of 5 or more. This impressive gain was consistently shown in drive tests in a real cellular network, with real mobile devices and a real live streaming service. The results show that the reduction of video stalls can be achieved without decreasing the average streaming rate. From this it could be interpreted that, on the average, video resolution must not be sacrificed for video fluency.

Further benefits are:

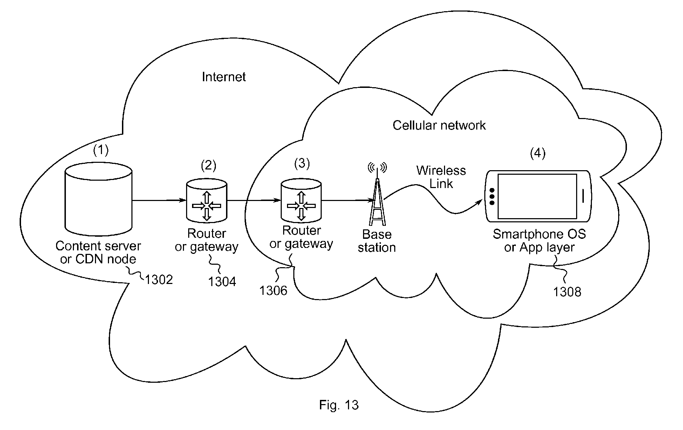

Flexible deployment: Only data available at the application layer of the mobile device might be used. This may mean that embodiments may be implemented as an application or software library. The solution may operate solely at the smartphone, or, to enable load balancing among multiple users, may operate as a central optimization server on various nodes in the Internet, as shown in Fig. 13. Fig. 13 shows a block diagram of possible entities comprising the apparatuses 10 and 20, for example, but not exclusively, a content server 1302, a router or gateway in the Internet 1304, a router or gateway in the cellular network 1306, or a smartphone operating system or application 1308.

Low computational complexity: Embodiments of the solution may perform adaptation at insignificant computational effort. Prototypes showed lightweight operation on typical smartphones and supported thousands of users, when operating on a conventional desktop processor.

No or insignificant signaling overhead: If embodiments are comprised in smartphones, no overhead might be added, compared to conventional HAS techniques. If embodiments are comprised in a central adaptation server, additional signaling may be required due to the required "context" information for the prediction (e.g., localization error and RSSI). Since information is typically only transmitted at the order of seconds, the communication overhead may be very low.

Privacy: Embodiments respect the privacy of its users. Embodiments may not require the user's location (only a localization accuracy measure may be required), may need no information about the content the user is streaming (only its bitrate and quality levels are required), and may require no further information about the user's service usage or its identity.

Practical: Embodiments might only use information that is already available at mobile devices (e.g., Smartphones, Tablets) at application level. It may neither require changes of hardware nor changes to the operation system (although both would be possible) and can, thus, be immediately implemented and integrated into existing services.

Existing: Embodiments are implemented as a fully operational, high performance prototype. The prototype has been extensively tested in drive tests in a real network, with real mobile devices, for a real streaming service under diverse conditions. The prototype is ready for field tests with real users and might be immediately used as a blueprint for production-level implementation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1.  An apparatus (10) for determining information related to a presentation time of buffered media data (50) at a media presentation device (100), the media data (50) being transmitted to the media presentation device (100) through a data channel (80), the apparatus (10) comprising
    an input (12) to obtain information related to a predicted future channel data capacity;
    an output (14) to provide the information related to the presentation time of the buffered media data (50); and
    a control module (16) to determine the information related to the presentation time based on the information related to the predicted future channel data capacity.

2. The apparatus (10) of claim 1, wherein the control module (16) is configured to determine information related to a first higher presentation time if the information related to the predicted future channel data capacity indicates a first lower future channel data capacity, and to determine information related to a second lower presentation time if the information related to the predicted future channel data capacity indicates a second higher future channel data capacity.

3. The apparatus (10) of claim 1, wherein the information related to the presentation time corresponds to information related to a selected quality level of a service providing the buffered media data (50), and wherein the control module (16) is configured to determine information related to a first lower selected quality level if the information related to the predicted future channel data capacity indicates a first lower future channel data capacity, and to determine information related to a second higher selected service level if the information related to the predicted future channel data capacity indicates a second higher future channel data capacity.

4. The apparatus (10) of claim 3, wherein the buffered media data (50) comprises one or more media segments (60), and wherein a lower selected quality level corresponds to media segments (60a) comprising a lower amount of data than media segments (60b) corresponding to a higher selected quality level.

5. The apparatus (10) of claim 1, wherein the data channel (80) corresponds to a wireless transmission channel.

6. The apparatus (10) of claim 1, wherein the input (12) is also configured to receive information related to a buffer status indicator of a buffer (52) for the buffered media data (50), and wherein the control module (16) is configured to determine the information related to the presentation time also based on the information related to the buffer status indicator.

7. The apparatus (10) of claim 6, wherein the control module (16) is configured to determine information related to a first higher presentation time corresponding to a first higher amount of stored media data (50) in the buffer (52) if the information related to the predicted future channel data capacity indicates a first lower future channel data capacity, and to determine information related to a second lower presentation time corresponding to a second lower amount of stored media data (50) in the buffer (52) if the information related to the predicted future channel data capacity indicates a second higher future channel data capacity.

8. The apparatus (10) of claim 7, wherein the buffered media data (50) comprises one or more media segments (60), and wherein the control module (16) is configured to affect the amount of buffered media data (50) in the buffer (52) in terms of a higher number of media segments (60) in the buffer (52) and/or wherein the control module (16) is configured to store media segments (60) comprising a lower amount of data if a buffer filling state is below a threshold, and wherein the control module (16) is configured to store media segments (60) comprising a higher amount of data if a buffer filling state is above a threshold.

9. The apparatus (10) of claim 1, wherein the control module (16) is configured to determine the information related to the presentation time based on an iterative algorithm running in an adaptation cycle, the iterative algorithm being based on a utility function depending at least on a state of a buffer (52) for the buffered media data (50), the state of the buffer (52) corresponding to one of a buffer underflow state, an intermediate filling state, or a full buffer state.

10. The apparatus (10) of claim 1 further configured to obtain information related to a predicted channel data capacity at a media presentation device (100) in a first radio system (300), the apparatus (10) further comprising at least one receiver module (18) to receive radio signals of the first radio system (300) and radio signals of a second radio system (310), wherein an effect of radio channel shadowing is higher on the radio signals of the second radio system (310) than on the radio signals of the first radio system (300), and wherein the control module (16) is further configured to determine a current channel state for the second radio system (310), and to provide first information related to a better predicted future channel data capacity for the first radio system (300) if the information related to the current channel state of the radio signals of the second radio system (310) indicates a better current channel state of the second radio system (310), and to provide second information related to a worse predicted future channel data capacity for the first radio system (300) if the information related to the current channel state of the radio signals of the second radio system (310) indicates a worse current channel state of the second radio system (310).

11. A user equipment (400) comprising the apparatus (10) of claim 1, wherein the data channel (80) corresponds to a wireless transmission channel.

12. An adaptation server (500) for a network (300b) comprising one or more clients (150) requesting one or more media services, the adaptation server (500) comprising the apparatus (10) of claim 1.

13. The adaptation server (500) of claim 11, wherein the control module (16) is configured to determine the information related to the presentation time of the buffered media data (50) for the one or more media services based on information related to the predicted future channel data capacity and/or information related to a buffer status indicator of the one or more clients (150).

14. A method for determining information related to a presentation time of buffered media data (50) at a media presentation device (100), the media data being transmitted to the media presentation device through a data channel (80), the method comprising obtaining (22) information related to a predicted future channel data capacity; providing (24) information related to the presentation time of the buffered media data (50); and determining (26) the information related to the presentation time based on information related to the predicted future channel data capacity.

15. A computer program having a program code for performing the method of claim 14, when the computer program is executed on a computer, a processor, or a programmable hardware component.


**Amended claims in accordance with Rule 137(2) EPC.**

1. An apparatus (10) for determining information related to a presentation time of buffered media data (50) at a media presentation device (100), the media data (50) being transmitted to the media presentation device (100) through a data channel (80), the apparatus (10) comprising an input (12) to obtain information related to a predicted future channel data capacity; an output (14) to provide the information related to the presentation time of the buffered media data (50); and a control module (16) to determine the information related to the presentation time based on the information related to the predicted future channel data capacity, wherein the control module (16) is configured to determine information related to a first longer presentation time if the information related to the predicted future channel data capacity indicates a first shorter future channel data capacity, and to determine information related to a second lower presentation time if the information related to the predicted future channel data capacity indicates a second higher future channel data capacity.

2. The apparatus (10) of claim 1, wherein the presentation time corresponds to information related a playout time in a playout buffer of a media streaming device, or information related to a buffered radius for a mapping or navigation service.

3. The apparatus (10) of claim 1, wherein the information related to the presentation time corresponds to information related to a selected quality level of a service providing the buffered media data (50), and wherein the control module (16) is configured to determine information related to a first lower selected quality level if the information related to the predicted future channel data capacity indicates a first lower future channel data capacity, and to determine information related to a second higher selected service level if the information related to the predicted future channel data capacity indicates a second higher future channel data capacity.

4. The apparatus (10) of claim 3, wherein the buffered media data (50) comprises one or more media segments (60), and wherein a lower selected quality level corresponds to media segments (60a) comprising a lower amount of data than media segments (60b) corresponding to a higher selected quality level.

5. The apparatus (10) of claim 1, wherein the data channel (80) corresponds to a wireless transmission channel.

6. The apparatus (10) of claim 1, wherein the input (12) is also configured to receive information related to a buffer status indicator of a buffer (52) for the buffered media data (50), and wherein the control module (16) is configured to determine the information related to the presentation time also based on the information related to the buffer status indicator.

7. The apparatus (10) of claim 6, wherein the control module (16) is configured to determine information related to a first longer presentation time corresponding to a first higher amount of stored media data (50) in the buffer (52) if the information related to the predicted future channel data capacity indicates a first lower future channel data capacity, and to determine information related to a second shorter presentation time corresponding to a second lower amount of stored media data (50) in the buffer (52) if the information related to the predicted future channel data capacity indicates a second higher future channel data capacity.

8. The apparatus (10) of claim 7, wherein the buffered media data (50) comprises one or more media segments (60), and wherein the control module (16) is configured to affect the amount of buffered media data (50) in the buffer (52) in terms of a higher number of media segments (60) in the buffer (52) and/or wherein the control module (16) is configured to store media segments (60) comprising a lower amount of data if a buffer filling state is below a threshold, and wherein the control module (16) is configured to store media segments (60) comprising a higher amount of data if a buffer filling state is above a threshold.

9. The apparatus (10) of claim 1, wherein the control module (16) is configured to determine the information related to the presentation time based on an iterative algorithm running in an adaptation cycle, the iterative algorithm being based on a utility function depending at least on a state of a buffer (52) for the buffered media data (50), the state of the buffer (52) corresponding to one of a buffer underflow state, an intermediate filling state, or a full buffer state.

10. The apparatus (10) of claim 1 further configured to obtain information related to a predicted channel data capacity at a media presentation device (100) in a first radio system (300), the apparatus (10) further comprising at least one receiver module (18) to receive radio signals of the first radio system (300) and radio signals of a second radio system (310), wherein an effect of radio channel shadowing is higher on the radio signals of the second radio system (310) than on the radio signals of the first radio system (300), and wherein the control module (16) is further configured to determine a current channel state for the second radio system (310), and to provide first information related to a better predicted future channel data capacity for the first radio system (300) if the information related to the current channel state of the radio signals of the second radio system (310) indicates a better current channel state of the second radio system (310), and to provide second information related to a worse predicted future channel data capacity for the first radio system (300) if the information related to the current channel state of the radio signals of the second radio system (310) indicates a worse current channel state of the second radio system (310).

11. A user equipment (400) comprising the apparatus (10) of claim 1, wherein the data channel (80) corresponds to a wireless transmission channel.

12. An adaptation server (500) for a network (300b) comprising one or more clients (150) requesting one or more media services, the adaptation server (500) comprising the apparatus (10) of claim 1.

13. The adaptation server (500) of claim 12, wherein the control module (16) is configured to determine the information related to the presentation time of the buffered media data (50) for the one or more media services based on information related to the predicted future channel data capacity and/or information related to a buffer status indicator of the one or more clients (150).

14. A method for determining information related to a presentation time of buffered media data (50) at a media presentation device (100), the media data being transmitted to the media presentation device through a data channel (80), the method comprising
obtaining (22) information related to a predicted future channel data capacity;
providing (24) information related to the presentation time of the buffered media data (50);
determining (26) the information related to the presentation time based on information related to the predicted future channel data capacity;
determining (28) information related to a first longer presentation time if the information related to the predicted future channel data capacity indicates a first lower future channel data capacity; and
determining (29) information related to a second shorter presentation time if the information related to the predicted future channel data capacity indicates a second higher future channel data capacity.

15. A computer program having a program code for performing the method of claim 14, when the computer program is executed on a computer, a processor, or a programmable hardware component.

80

Media Data 50

52

100

12

14

16

10

Fig. 1

Stream for quality level 1

...

Stream for quality level L

Content server or CDN node
8002

Internet and mobile network
8080

8052

Buffer state
Segments

HAS algorithm

Processing and output

Quality level

Playout buffer

Network library

Mobile device
8100

Segment downstream

HTTP query

Fig. 2

Fig. 3

Fig. 4

Fig. 5

$$6008$$

$$(1) \quad \Delta E_{T_1}[\gamma] > \Gamma \wedge E_{T_2}[e] < \Omega \qquad\qquad (1)$$

$$-1 \qquad\qquad 0 \qquad\qquad +1$$

$$6002 \qquad\qquad 6004 \qquad\qquad 6006$$

$$(2) \quad \Delta E_{T_1}[\gamma] \leq \Gamma \vee E_{T_2}[e] \geq \Omega \qquad\qquad (2)$$

$$6010$$

Fig. 6

Fig. 7

Fig. 8

Fig. 9

Fig. 10

Fig. 11

| Obtaining | → | Determining | → | Providing |

22          26          24

Fig. 12

Internet

Cellular network

(1)

(2)

(3)

Wireless
Link

(4)

Content server
or CDN node

Router
or gateway

Router
or gateway

Base
station

Smartphone OS
or App layer

1302          1304          1306                                              1308

Fig. 13

Europäisches
Patentamt

European
Patent Office

Office européen
des brevets

# EUROPEAN SEARCH REPORT

Application Number

EP 14 30 6735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 850 055 B1 (MANI JAI JOHN [US] ET AL) 30 September 2014 (2014-09-30) | 1-5, 10-15 | INV. H04N21/234 |
| Y | * figure 3 * <br> * column 1, lines 35-42 * <br> * column 3, lines 18-28 * <br> * column 4, line 26 * <br> * column 5, lines 9-41 * <br> * column 6, lines 15-27 * <br> ----- | 6-9 | H04N21/2343 H04N21/24 H04N21/414 H04N21/61 H04N21/647 |
| Y | WO 2013/030852 A2 (SLING MEDIA PVT LTD [IN]; GOMES CONRAD SAVIO JUDE [IN]; M GIREESH KUMA) 7 March 2013 (2013-03-07) <br> * figure 4 * <br> * paragraph [0042] * <br> ----- | 6-9 | |
| A | US 2010/333148 A1 (MUSHA YOSHINORI [JP] ET AL) 30 December 2010 (2010-12-30) <br> * paragraphs [0003], [0061] * <br> ----- | 1-15 | |
| A | TURNER D A ET AL: "ADAPTIVE STREAMING OF LAYER-ENCODED MULTIMEDIA PRESENTATIONS", JOURNAL OF VLSI SIGNAL PROCESSING SYSTEMS FOR SIGNAL, IMAGE, AND VIDEO TECHNOLOGY, SPRINGER, NEW YORK, NY, US, vol. 34, no. 1/02, 1 May 2003 (2003-05-01) , pages 83-99, XP001159491, ISSN: 0922-5773, DOI: 10.1023/A:1022817821444 <br> * abstract * <br> * page 85, column 2 * <br> ----- | 1-15 | TECHNICAL FIELDS SEARCHED (IPC) <br><br> H04N |

The present search report has been drawn up for all claims

| Place of search | Date of completion of the search | Examiner |
|---|---|---|
| The Hague | 1 April 2015 | Doyle, Walter |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 14 30 6735

This annex lists the patent family members relating to the patent documents cited in  the above-mentioned European search report.
The members are as contained in the European Patent Office EDP file on
The European Patent Office is in no way liable for these particulars which are merely given for the purpose of information.

01-04-2015

| Patent document cited in search report | | Publication date | Patent family member(s) | | Publication date |
|---|---|---|---|---|---|
| US 8850055 | B1 | 30-09-2014 | US | 8850055 B1 | 30-09-2014 |
| | | | US | 2015081924 A1 | 19-03-2015 |
| | | | WO | 2015042127 A2 | 26-03-2015 |
| WO 2013030852 | A2 | 07-03-2013 | CA | 2847081 A1 | 07-03-2013 |
| | | | EP | 2752002 A2 | 09-07-2014 |
| | | | US | 2014297813 A1 | 02-10-2014 |
| | | | WO | 2013030852 A2 | 07-03-2013 |
| US 2010333148 | A1 | 30-12-2010 | CN | 101945262 A | 12-01-2011 |
| | | | EP | 2268029 A1 | 29-12-2010 |
| | | | JP | 2011009904 A | 13-01-2011 |
| | | | US | 2010333148 A1 | 30-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. L. PUTERMAN.** Markov Decision Processes: Discrete Stochastic Dynamic Programming. Wiley, 2005
- **W. LAW.** OTT and Scale: The Darkness and the Light. *Over-the-top TV conference (OTTCon),* 2013
- **R.P. PANTOS ; W.M. MAY.** *HTTP Live Streaming,* 16 April 2014, http://tools.ietf.org/html/draft-pantos-http-live-streaming-13
- Information technology -- Dynamic adaptive streaming over HTTP (DASH) -- Part 1: Media presentation description and segment formats. *International Standard DIS 23009-1.2,* November 2011
- **J. JIANG ; V. SEKAR ; H. ZHANG.** Improving fairness, efficiency, and stability in HTTP-based adaptive video streaming with FESTIVE. *Proc. of the 8th Int. Conf. on Emerging Networking Experiments and Technologies,* 2012
- **G. TIAN ; Y. LIU.** Towards agile and smooth video adaptation in dynamic HTTP streaming. *Proc. of the 8th Int. Conf. on Emerging Networking Experiments and Technologies,* 2012
- **H. RIISER ; H. S. BERGSAKER ; P. VIGMOSTAD ; P. HALVORSEN ; C. GRIWODZ.** A comparison of quality scheduling in commercial adaptive HTTP streaming solutions on a 3G network. *Proc. Of the 4th Workshop on Mobile Video,* 2012
- **C. MULLER ; S. LEDERER ; C. TIMMERER.** An evaluation of dynamic adaptive streaming over HTTP in vehicular environments. *Proc. of the 4th Workshop on Mobile Video,* 2012
- *Bell Labs and net mobile AG improve the quality of video streaming in vehicles on the move,* 17 June 2014, http://www.alcatel-lucent.com/press/2014/bell-labs-and-net-mobile-ag-improve-quality-video-streaming-vehicles-move